# EUROPÄISCHE PATENTANMELDUNG

(11) **EP 1 207 412 A2**
(43) Veröffentlichungstag der Anmeldung: **22.05.2002**
(21) Anmeldenummer: 01125256.6
(22) Anmeldetag: 24.10.2001
(51) Int. Cl.: G02B 6/42

(54) **Optoelektronisches Mikromodul**

(30) Priorität: 16.11.2000 DE 10056790
(71) Anmelder: Infineon Technologies AG, 81669 München (DE)
(72) Erfinder: Auracher, Franz, 82065 Baierbrunn (DE)
(74) Vertreter: Viering, Jentschura & Partner

(57) **Zusammenfassung**

Ein optoelektronisches Mikromodul (201) weist auf ein optoelektronisches Bauelement (204), welches auf einem Hauptträger (202) befestigt ist und Licht in eine parallel zu einer Hauptträgeroberfläche (203) des Hauptträgers (202) gerichtete Emissionsrichtung (206) emittieren kann, und eine Strahlungsvariationseinheit (208), welche in Emissionsrichtung (206) angeordnet und an einem Hilfsträger (209) befestigt ist, welcher eine Hilfsträgeroberfläche (210) aufweist, welche zu der Hauptträgeroberfläche (203) planparallel ausgerichtet ist und mit dieser in Berührungskontakt steht. Der Hilfsträger (209) ist planparallel zur Hilfsträgeroberfläche (210) relativ zur Emissionsrichtung (206) verschiebbar angeordnet, wodurch eine zweidimensionale Justage der Strahlungsvariationseinheit (208) ermöglicht wird. Die Strahlungsvariationseinheit (208) kann sowohl parallel als auch senkrecht zur Emissionsrichtung (206) justiert werden.

## Beschreibung

Die Erfindung betrifft ein optoelektronisches Mikromodul.

Ein solches optoelektronisches Mikromodul ist aus EP 0 331 331 A2, EP 0 660 467 A1 und DE 43 13 493 A1 bekannt.

In EP 0 331 331 A2 wird ein optoelektronisches Mikromodul offenbart, welches ein optisches Bauelement und eine Fokussierungslinse aufweist. Das optische Bauelement emittiert optische Strahlung in eine Emissionsrichtung senkrecht zu einer Hauptträgeroberfläche. In Emissionsrichtung ist oberhalb des optischen Bauelements die Fokussierungslinse angeordnet, welche von einem Hilfsträger gehalten wird. Die Fokussierungslinse kann dabei mittels des Hilfsträgers derart verschoben werden, dass eine Justage der Strahlrichtung ermöglicht wird. Ein Nachteil der beschriebenen Anordnung ist jedoch, dass eine Justage der Fokussierung auf Grund einer Verschiebung der Fokussierungslinse in oder entgegen der Strahlrichtung nicht ermöglicht wird.

Die DE 43 13 493 A1 offenbart ein optoelektronisches Mikromodul, bei welchem ein Lichtwellenleiter mittels einer Kugellinse an ein lichtaussendendes Element gekoppelt wird. Die Kugellinse ist dabei fast in Emissionsrichtung des lichtaussendenden Elements angeordnet. Das lichtaussendende Element ist auf einem Träger befestigt. Die Kugellinse ist in einem geätzten Graben positioniert, welcher in den Träger eingebracht ist. Eine Verschiebung der Kugellinse ist in dem beschriebenen optoelektronisches Mikromodul jedoch nicht vorgesehen. Somit kann eine Justage sowohl der Strahlrichtung als auch der Fokussierung der Kugellinse nur aufwändig durchgeführt werden.

**Figur 1** zeigt eine vereinfachte Darstellung des aus EP 0 660 467 A1 bekannten optoelektronischen Mikromoduls 101.

Das optoelektronische Mikromodul 101 weist auf ein Substrat 102 mit einer Substratoberfläche 103, auf der eine Laserdiode 104, eine Monitordiode 105 und ein Glasprisma 106 befestigt sind. Die Laserdiode 104 emittiert Laserstrahlung parallel zur Substratoberfläche 103 vorwiegend in eine erste Strahlrichtung 107 und in eine zweite Strahlrichtung 108, wobei letztere entgegengesetzt zur ersten Strahlrichtung 107 ausgerichtet ist. Die Monitordiode 105 ist Bestandteil einer Steuereinheit (nicht gezeigt) für die Laserdiode 104 und dazu auf der Substratoberfläche 103 derart angeordnet, dass von der Laserdiode 104 in die zweite Strahlrichtung 108 emittierte Laserstrahlung in die Monitordiode 105 einfallen kann. Das Glasprisma 106 weist eine Spiegelfläche 109 auf, die einen Winkel von 45° zur Senkrechten der Substratoberfläche 103 einschließt, und ist auf der Substratoberfläche 103 derart angeordnet, dass von der Laserdiode 104 in die erste Strahlrichtung 107 emittierte Laserstrahlung von der Spiegelfläche 109 aus der ersten Strahlrichtung 107 in eine dritte Strahlrichtung 110 abgelenkt wird und somit eine Strahlumlenkung erfolgt. Diese dritte Strahlrichtung 110 ist senkrecht zur Substratoberfläche 103 ausgerichtet. Das Glasprisma 106 wird von einer in einem Planarprozess hergestellten Linsenoptik 111 mit einem wirksamen optischen Bereich 112 auf einer der Substratoberfläche 103 gegenüberliegenden Fläche bedeckt. Die Linsenoptik 111 ist dabei so angeordnet, dass Laserstrahlung in der dritten Strahlrichtung 110 durch den wirksamen optischen Bereich 112 hindurchläuft und von diesem auf einen gewünschten Punkt fokussiert wird.

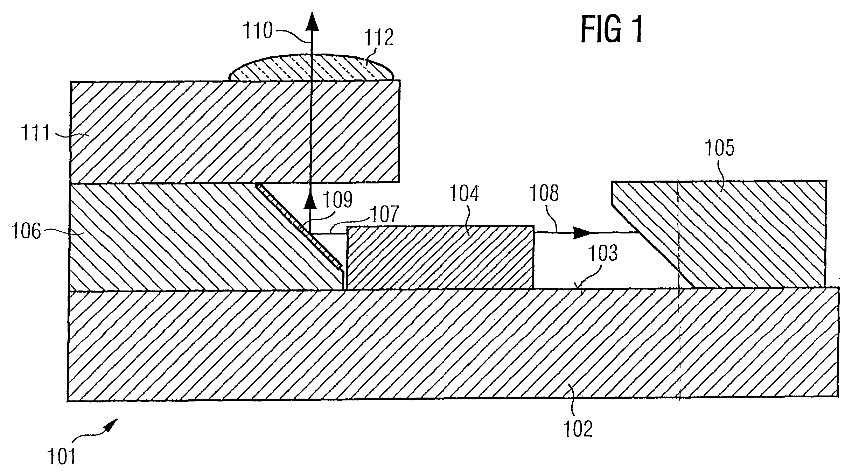

Durch die in Figur 1 gezeigte Aufbauweise wird eine unbefriedigende optische Qualität der fokussierten Laserstrahlung erreicht, so dass bei der Einkopplung der Laserstrahlung in einen Monomode-Lichtwellenleiter typischerweise nur ein Koppelwirkungsgrad von ca. 25% erreicht wird. Dies liegt vor allem an den unzureichenden optischen Eigenschaften der in einem Planarprozess hergestellten Linsenoptik 111. Bei der typischerweise hohen optischen Apertur der Laserdiode 104 zeigt die Linsenoptik 111 hohe Aberrationsfehler und kann auch nicht mit dem erforderlichen Durchmesser des wirksamen optischen Bereichs 112 hergestellt werden. Außerdem ist die Strahlumlenkung für viele optoelektronische Mikromodule unerwünscht, beispielsweise für optoelektronische Mikromodule in Butterflygehäusen.

Eine Justage eines optoelektronischen Mikromoduls, welche während des Betriebes des optoelektronischen Mikromoduls erfolgen kann, wird als aktive Justage bezeichnet.

Der Erfindung liegt das Problem zugrunde, ein optoelektronisches Mikromodul zu schaffen, das in zwei Dimensionen aktiv justiert werden kann, bei dem auf eine Umlenkung des optischen Strahlenganges verzichtet werden kann sowie optische Komponenten mit hoher optischer Qualität verwendet werden können. Die optischen Komponenten sind dabei zur Beeinflussung von Licht vorgesehen (z.B. Fokussierung, Ablenkung, Filterung, Modulation, etc.), wobei unter Licht elektromagnetische Strahlung im Wellenlängenbereich von Ultraviolett bis fernes Infrarot zu verstehen ist.

Das Problem wird durch das optoelektronische Mikromodul mit den Merkmalen gemäß dem unabhängigen Patentanspruch gelöst.

Ein optoelektronisches Mikromodul weist ein optoelektronisches Bauelement, beispielsweise eine optoelektronische Strahlungsquelle, sowie eine Strahlungsvariationseinheit auf. Das optoelektronische Bauelement ist dabei auf einem Hauptträger befestigt und kann Licht in eine Emissionsrichtung emittieren, wobei die Emissionsrichtung parallel zu einer Hauptträgeroberfläche des Hauptträgers gerichtet ist. Ferner ist die Strahlungsvariationseinheit in Emissionsrichtung angeordnet und an einem Hilfsträger befestigt. Der Hilfsträger weist eine Hilfsträgeroberfläche auf, welche zu der Hauptträgeroberfläche planparallel ausgerichtet ist und mit dieser in Berührungskontakt steht. Ferner ist der Hilfsträger planparallel zur Hilfsträgeroberfläche relativ zur Emissionsrichtung verschiebbar angeordnet, wodurch eine zweidimensionale Justage der Strahlungsvariationseinheit ermöglicht wird. Die Strahlungsvariationseinheit kann sowohl parallel als auch senkrecht zur Emissionsrichtung justiert werden.

Alternativ kann das optoelektronische Bauelement auch in mindestens zwei Emissionsrichtungen Licht emittieren. Dann ist es von Vorteil, wenn in jeder Emissionsrichtung eine Strahlungsvariationseinheit vorgesehen ist.

Ferner kann im Hauptträger eine Aussparung vorgesehen sein, in der die Strahlungsvariationseinheit während ihrer Justage ohne Kontakt zum Hauptträger frei bewegbar zumindest teilweise aufgenommen werden kann.

Die Aussparung im Hauptträger kann auch als Durchgangsöffnung ausgebildet sein.

In einer bevorzugten Ausführungsform des optoelektronischen Mikromoduls ist im Hilfsträger ein Durchgangsloch vorgesehen, damit das Licht nach Passieren der Strahlungsvariationseinheit das optoelektronische Mikromodul verlassen kann.

Als Fertigungsmaterial für den Hauptträger und den Hilfsträger wird bevorzugt Silizium gewählt, da durch Kristallwachstum sowie Vorzugsätzen die Form der Träger sowie der Aussparungen gezielt gesteuert werden kann. Es kann jedes beliebige Verfahren zum Kristallwachstum sowie zum Vorzugsätzen eingesetzt werden. Es wird darauf hingewiesen, dass die Fertigung von Siliziumträgern mit sehr großer Präzision möglich ist.

Ein Vorteil des erfindungsgemäßen optoelektronischen Mikromoduls ist, dass die Strahlungsvariationseinheit justiert werden kann, während das optoelektronische Bauelement emittiert, d.h. es kann eine aktive Justage erfolgen.

Gemäß einer ersten Ausgestaltung der Erfindung kann als Strahlungsvariationseinheit eine Kugellinse vorgesehen sein, welche das von dem optoelektronischen Bauelement emittierte Licht durch das Durchgangsloch im Hilfsträger hindurch beispielsweise auf ein Eingangsende eines Lichtwellenleiters fokussiert.

Statt einer Kugellinse können jedoch auch andere optische Komponenten verwendet werden.

Die Strahlungsvariationseinheit ist gemäß einer zweiten Ausgestaltung der Erfindung durch eine sphärische Linse verwirklicht, welche ebenso wie die oben beschriebene Kugellinse das von dem optoelektronischen Bauelement emittierte Licht durch das Durchgangsloch im Hilfsträger hindurch beispielsweise auf ein Eingangsende eines Lichtwellenleiters fokussiert.

In einer dritten Ausgestaltung der Erfindung ist als Strahlungsvariationseinheit ein ebener Spiegel vorgesehen, welcher das von dem optoelektronischen Bauelement emittierte Licht durch das Durchgangsloch im Hilfsträger hindurch beispielsweise auf einen optoelektronischen Empfänger ausrichtet.

Eine vierte Ausgestaltung der Erfindung sieht vor, dass die Strahlungsvariationseinheit durch einen fokussierenden Spiegel verwirklicht sein kann, welcher das von dem optoelektronischen Bauelement emittierte Licht durch das Durchgangsloch im Hilfsträger hindurch beispielsweise auf ein Eingangsende eines Lichtwellenleiters ausrichtet und das Licht dabei auf dieses Eingangsende fokussiert.

Die Strahlungsvariationseinheit ist gemäß einer fünften Ausgestaltung der Erfindung derart eingerichtet, dass ein Frequenzvervielfachungskristall das von dem optoelektronischen Bauelement emittierte Licht aufnimmt, das Spektrum des Lichts verändert und das derart veränderte Licht durch das Durchgangsloch im Hilfsträger hindurch an einen Nutzer abgibt.

In einer sechsten Ausgestaltung der Erfindung ist als Strahlungsvariationseinheit ein Polarisator vorgesehen, welcher das von dem optoelektronischen Bauelement emittierte Licht nur mit einer bestimmten Polarisation durch das Durchgangsloch im Hilfsträger hindurchtreten lässt.

Gemäß einer siebten Ausgestaltung der Erfindung ist die Strahlungsvariationseinheit durch einen Filter verwirklicht, welcher das von dem optoelektronischen Bauelement emittierte Licht entsprechend der Filterkurve gefiltert durch das Durchgangsloch im Hilfsträger hindurchtreten lässt.

In Abhängigkeit von der gewünschten Ausgestaltung der Erfindung in bezug auf die Strahlungsvariationseinheit kann sich das Durchgangsloch im Hilfsträger an unterschiedlichen Stellen befinden sowie unterschiedliche Querschnittsformen haben.

In einer weiteren Ausgestaltung der Erfindung ist das optoelektronische Bauelement auch derart eingerichtet, dass es Licht auf mindestens einer Seite empfangen kann. An Stelle von mindestens einer Emissionsrichtung weist das optoelektronische Mikromodul dann mindestens eine Empfangsrichtung auf.

Als optoelektronisches Bauelement wird bevorzugt eine Halbleiter-Laserdiode gewählt, die Licht einer bestimmten Wellenlänge emittiert. Es können jedoch auch elektrooptische Filter, optoelektronische Halbleiterverstärker oder optoelektronische Modulatoren als optoelektronisches Bauelement verwendet werden. Zu den optoelektronischen Modulatoren zählen beispielsweise Elektroabsorptionsmodulatoren, Mach-Zehnder-Modulatoren sowie Laserdioden mit monolithisch integrierten Modulatoren.

Unter Berücksichtigung des verwendeten optoelektronischen Bauelements handelt es sich bei der Strahlungsvariationseinheit vorzugsweise um ein oder mehrere optische Komponenten.

Ausführungsbeispiele der Erfindung sind in den Figuren dargestellt und werden im weiteren näher erläutert.

Es zeigen
- Figur 1: ein optoelektronisches Mikromodul gemäß dem Stand der Technik;
- Figur 2: ein optoelektronisches Mikromodul gemäß einem ersten Ausführungsbeispiel der Erfindung; und
- Figur 3: einen Teil eines optoelektronischen Mikromoduls gemäß einem zweiten Ausführungsbeispiel der Erfindung.

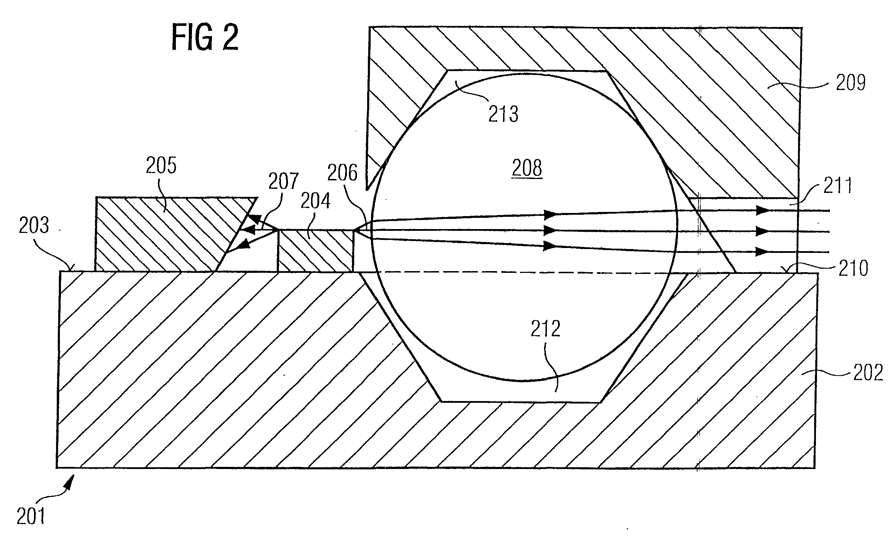

**Figur 2** zeigt ein optoelektronisches Mikromodul 201 gemäß einem ersten Ausführungsbeispiel der Erfindung.

Das optoelektronische Mikromodul 201 weist auf einen Hauptträger 202 mit einer Hauptträgeroberfläche 203, auf der eine Halbleiter-Laserdiode als optoelektronisches Bauelement 204 und ein Sensor 205 befestigt sind. Das optoelektronische Bauelement 204 emittiert Licht parallel zur Hauptträgeroberfläche 203 vorwiegend in eine erste Emissionsrichtung 206 und in eine zweite Emissionsrichtung 207, wobei letztere entgegengesetzt zur ersten Emissionsrichtung 206 ausgerichtet ist.

Der Sensor 205 ist Bestandteil einer Steuereinheit (nicht gezeigt) für das optoelektronische Bauelement 204 und dazu auf der Hauptträgeroberfläche 203 derart angeordnet, dass von dem optoelektronischen Bauelement 204 in die zweite Emissionsrichtung 207 emittiertes Licht in den Sensor 205 einfallen kann.

Eine als Strahlungsvariationseinheit 208 dienende Kugellinse ist an einem Hilfsträger 209 befestigt, welcher eine Hilfsträgeroberfläche 210 aufweist, die zur Hauptträgeroberfläche 203 planparallel ausgerichtet ist und mit dieser in Berührungskontakt steht. Damit das in die erste Emissionsrichtung 206 emittierte Licht nach Passieren der Strahlungsvariationseinheit 208 das optoelektronische Mikromodul 201 ungehindert verlassen kann, ist im Hilfsträger 209 ein Durchgangsloch 211 vorgesehen.

Der Hilfsträger 209 ist planparallel zur Hilfsträgeroberfläche 210 relativ zur ersten Emissionsrichtung 206 verschiebbar angeordnet, wodurch in einer Ebene eine zweidimensionale Justage der Strahlungsvariationseinheit 208 während des Betriebes des optoelektronischen Bauelements 204 ermöglicht wird. Eine Justage der Strahlungsvariationseinheit 208 in der Ebene ist vor allem senkrecht und parallel zur ersten Emissionsrichtung 206 notwendig, um eine möglichst optimale optische Effizienz bei der Umsetzung des Lichts zu erzielen.

Um eine Justage der Strahlungsvariationseinheit 208 zu ermöglichen, ist im Hauptträger 202 eine Aussparung 212 vorgesehen, die auch als Durchgangsöffnung durch den Hauptträger 202 ausgebildet sein kann. Diese Aussparung 212 ist derart ausgebildet, dass die am Hilfsträger 209 befestigte Strahlungsvariationseinheit 208 ohne Kontakt zum Hauptträger 202 frei bewegt und justiert sowie teilweise von der Aussparung 212 aufgenommen werden kann.

Bei der Herstellung eines erfindungsgemäßen optoelektronischen Mikromoduls 201 sollte nach der Justage der Strahlungsvariationseinheit 208, d.h. nach Verschieben des Hilfsträgers 209, der Hilfsträger 209 auf dem Haupttrager 202 befestigt werden.

Bei einem erfindungsgemäßen optoelektronischen Mikromodul 201 könnte in der ersten Emissionsrichtung 206 nach dem optoelektronischen Bauelement 204 und der Strahlungsvariationseinheit 208 noch ein optoelektronischer Empfänger vorgesehen sein, insbesondere dann, wenn das optoelektronische Bauelement 204 durch den Ausgang eines Lichtwellenleiters verwirklicht ist.

Entsprechend der gewünschten Variation des emittierten Lichts kann als Strahlungsvariationseinheit 208 ferner eine sphärische Linse, ein ebener Spiegel, ein fokussierender Spiegel, ein Frequenzvervielfachungskristall, ein Polarisator oder ein Filter vorgesehen sein. In Abhängigkeit von der gewählten Art der Strahlungsvariationseinheit 208 befindet sich das Durchgangsloch 211 im Hilfsträger 209 an unterschiedlichen Stellen und kann unterschiedliche Querschnittsformen haben.

Die Strahlungsvariationseinheit 208 kann in eine Vertiefung 213 des Hilfsträgers 209 eingeklebt, eingeglast oder gebondet sein.

Bei einer Herstellung von Hauptträger 202 und Hilfsträger 209 aus dem Halbleitermaterial Silizium ist die Fertigung der dargestellten Formen, insbesondere des Durchgangslochs 211, der Aussparung 212 und der Vertiefung 213, durch Vorzugsätzen möglich.

Die Befestigung des Hilfsträgers 209 am Hauptträger 202 nach Justage der Strahlungsvariationseinheit 208 kann mittels Lötung, Kleben oder Bonden erfolgen.

Die Hauptträgeroberfläche 203 und die Hilfsträgeroberfläche 210 sind bevorzugt sehr eben ausgeführt, damit eine gleichmäßige zweidimensionale Justage der Strahlungsvariationseinheit 208 gewährleistet ist. Die Einstellung der Position der Strahlungsvariationseinheit 208 senkrecht zur Hilfsträgeroberfläche 210 kann beispielsweise durch die Form des Hilfsträgers 209, insbesondere durch die Ausgestaltung der Vertiefung 213 im Hilfsträger 209, erfolgen.

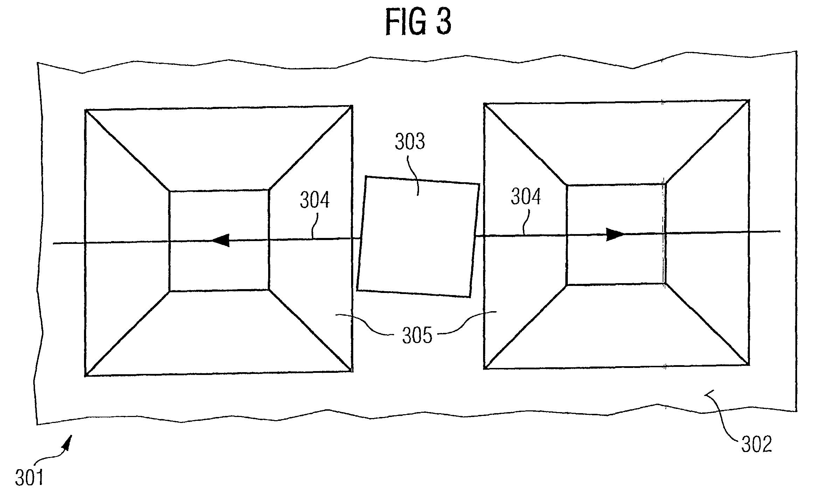

**Figur 3** zeigt einen Teil eines optoelektronischen Mikromoduls 301 gemäß einem zweiten Ausführungsbeispiel der Erfindung.

Das optoelektronische Mikromodul 301 weist auf eine Hauptträgeroberfläche 302, auf der ein zweiseitig emittierendes optoelektronisches Bauelement 303 befestigt ist. Das zweiseitig emittierende optoelektronische Bauelement 303 emittiert in zwei entgegengesetzte Emissionsrichtungen 304 Licht. In jede der zwei entgegengesetzten Emissionsrichtungen 304 ist eine an einem Hilfsträger befestigte Strahlungsvariationseinheit vorgesehen. Der besseren Übersichtlichkeit wegen ist nur eine Draufsicht auf die Hauptträgeroberfläche 302 gezeigt, wobei auf eine Darstellung der Strahlungsvariationseinheiten sowie der Hilfsträger verzichtet wurde. Details der in dieser Figur nicht beschriebenen Komponenten können aus der Beschreibung der Figur 2 entnommen werden. Deutlich sind die Vertiefungen 305 in der Hauptträgeroberfläche 302 dargestellt, die zur teilweisen Aufnahme der Strahlungsvariationseinheiten dienen und derart ausgebildet sind, dass bei einer Justage der Strahlungsvariationseinheiten diese ohne Kontakt zum Hauptträger frei bewegbar sind.

### Bezugszeichenliste

- 101: optoelektronisches Mikromodul gemäß Stand der Technik
- 102: Substrat
- 103: Substratoberfläche
- 104: Laserdiode
- 105: Monitordiode
- 106: Glasprisma
- 107: erste Strahlrichtung
- 108: zweite Strahlrichtung
- 109: Spiegelfläche
- 110: dritte Strahlrichtung
- 111: Linsenoptik
- 112: wirksamer optischer Bereich
- 201: optoelektronisches Mikromodul gemäß erstem Ausführungsbeispiel der Erfindung
- 202: Hauptträger
- 203: Hauptträgeroberfläche
- 204: optoelektronisches Bauelement
- 205: Sensor
- 206: erste Emissionsrichtung
- 207: zweite Emissionsrichtung
- 208: Strahlungsvariationseinheit
- 209: Hilfsträger
- 210: Hilfsträgeroberfläche
- 211: Durchgangsloch
- 212: Aussparung
- 213: Vertiefung
- 301: optoelektronisches Mikromodul gemäß zweitem Ausführungsbeispiel der Erfindung
- 302: Hauptträgeroberfläche
- 303: zweiseitig emittierendes optoelektronisches Bauelement
- 304: entgegengesetzte Emissionsrichtungen
- 305: Vertiefungen

## Patentansprüche

1. Optoelektronisches Mikromodul (201) mit einem optoelektronischen Bauelement (204) und einer Strahlungsvariationseinheit (208),
• bei dem das optoelektronische Bauelement (204) auf einem Hauptträger (202) befestigt ist und Licht in eine Emissionsrichtung (206) emittieren kann, wobei die Emissionsrichtung (206) parallel zu einer Hauptträgeroberfläche (203) des Hauptträgers (202) gerichtet ist,
• bei dem die Strahlungsvariationseinheit (208) in Emissionsrichtung (206) angeordnet und an einem Hilfsträger (209) befestigt ist, welcher eine Hilfsträgeroberfläche (210) aufweist, welche zu der Hauptträgeroberfläche (203) planparallel ausgerichtet ist und mit dieser in Berührungskontakt steht,
• bei dem der Hilfsträger (209) planparallel zur Hilfsträgeroberfläche (210) relativ zur Emissionsrichtung (206) verschiebbar angeordnet ist, wodurch eine zweidimensionale Justage der Strahlungsvariationseinheit (208) ermöglicht wird, und
• bei dem die Strahlungsvariationseinheit (208) sowohl parallel als auch senkrecht zur Emissionsrichtung (206) justiert werden kann.

2. Optoelektronisches Mikromodul (201) gemäß Anspruch 1, bei dem im Hauptträger (202) eine Aussparung (212) vorgesehen ist, in der die Strahlungsvariationseinheit (208) während ihrer Justage ohne Kontakt zum Hauptträger (202) frei bewegbar zumindest teilweise aufgenommen werden kann.

3. Optoelektronisches Mikromodul (201) gemäß Anspruch 2, bei dem die Aussparung (212) im Hauptträger (202) eine Durchgangsöffnung ist.

4. Optoelektronisches Mikromodul (201) gemäß einem der vorangehenden Ansprüche,
bei dem im Hilfsträger (209) ein Durchgangsloch (211) vorgesehen ist, durch welches das Licht nach Passieren der Strahlungsvariationseinheit (208) das optoelektronische Mikromodul (201) verlassen kann.

5. Optoelektronisches Mikromodul (201) gemäß einem der vorangehenden Ansprüche,
bei dem als Strahlungsvariationseinheit (208) eine Kugellinse vorgesehen ist, die in einer Vertiefung (213) des Hilfsträgers (209) befestigt ist.

6. Optoelektronisches Mikromodul (201) gemäß einem der vorangehenden Ansprüche,
bei dem Hauptträger (202) und/oder Hilfsträger (209) aus Silizium gefertigt sind.

7. Optoelektronisches Mikromodul (201) gemäß Anspruch 6, bei dem eine beliebige Kombination von Aussparung (212), Durchgangsloch (211) und Vertiefung (213) durch Vorzugsätzen gefertigt ist.

8. Optoelektronisches Mikromodul (201) gemäß einem der vorangehenden Ansprüche,
bei dem das optoelektronische Bauelement (204) derart eingerichtet ist, dass in mindestens zwei Emissionsrichtungen (206, 207) Licht emittiert werden kann.

9. Optoelektronisches Mikromodul (201) gemäß Anspruch 8, bei dem in jeder Emissionsrichtung (206, 207) eine Strahlungsvariationseinheit (208) vorgesehen ist.

10. Optoelektronisches Mikromodul (201) gemäß einem der vorangehenden Ansprüche,
bei dem das optoelektronische Bauelement (204) derart eingerichtet ist, dass es Licht empfangen kann.

11. Optoelektronisches Mikromodul (201) gemäß einem der vorangehenden Ansprüche,
bei dem als optoelektronisches Bauelement (204) ein optoelektronischer Halbleiterverstärker vorgesehen ist.

12. Optoelektronisches Mikromodul (201) gemäß einem der Ansprüche 1 bis 10,
bei dem als optoelektronisches Bauelement (204) ein optoelektronischer Modulator vorgesehen ist.

13. Optoelektronisches Mikromodul (201) gemäß einem der Ansprüche 1 bis 10,
bei dem als optoelektronisches Bauelement (204) ein elektrooptisches Filter vorgesehen ist.
